# EUROPÄISCHE PATENTANMELDUNG

(11) **EP 2 332 693 A1**
(43) Veröffentlichungstag der Anmeldung: **15.06.2011**
(21) Anmeldenummer: 10002827.3
(22) Anmeldetag: 17.03.2010
(51) Int. Cl.: B24C 1/00, C01B 31/22

(54) **Vorrichtung und Verfahren zum Erzeugen und Applizieren von Trockeneis**

(30) Priorität: 08.12.2009 DE 102009057265
(71) Anmelder: Linde AG, 80331 München (DE)
(72) Erfinder: Heninger, Rolf, 85635 Höhenkirchen-Siegertsbrunn (DE)
(74) Vertreter: Schüssler, Andrea

(57) **Zusammenfassung**

Eine Vorrichtung zum Erzeugen von Trockeneis ist versehen mit einer Zuführungseinrichtung für flüssiges CO₂, die in einen Entspannungsraum einmündet, wobei die Zuführungseinrichtung und der Entspannungsraum ausgelegt und eingerichtet sind, in dem Entspannungsraum Trockeneis entstehen zu lassen; einer Förderschnecke, die in dem Entspannungsraum angeordnet ist und die ausgelegt und eingerichtet ist, in dem Entspannungsraum entstehendes Trockeneis von der Einmündung der Zuführungseinrichtung in Richtung einer Matrize zu fördern, wobei die Matrize ausgelegt und eingerichtet ist, in dem Entspannungsraum entstandenes und gegebenenfalls agglomeriertes Trockeneis aus dem Entspannungsraum zu entlassen und dabei zu Paketen zu formen; und einer Entgasungseinrichtung, aufweisend einen Filter, der den Entspannungsraum begrenzt und für CO₂-Gas durchlässig, für CO₂-Partikel jedoch undurchlässig ist, und ist dadurch gekennzeichnet, dass der Filter den Entspannungsraum radial begrenzt.

## Beschreibung

Die vorliegende Erfindung betrifft eine Vorrichtung und ein Verfahren zum Erzeugen und Applizieren von Trockeneisschnee.

### Bisheriger Stand der Technik

Bekannt und etabliert ist das Verfahren zur Reinigung von Oberflächen mit Kohlendioxid-Teilchen, die mit Druckluft auf hohe Geschwindigkeiten beschleunigt und auf die Oberfläche geblasen werden. Die Reinigungswirkung resultiert einerseits aus der kinetischen Energie der Teilchen, andererseits aus dem schlagartigen Sublimieren nach dem Auftreffen auf die Oberfläche.

Die Kohlendioxid-Teilchen werden z.B. in Form von CO₂-Schnee verwendet. Das Reinigen mit CO₂-Schnee ist sehr sanft, kann aber oftmals stark anhaftenden Schmutz nicht entfernen. Die Reinigungswirkung ist bei gleichem Materialeinsatz umso besser, je größer die Schneekristalle bzw. ,,Pakete" von Kristallen sind. Das Reinigen mit CO₂-Pellets ist effizienter als das Reinigen mit CO₂-Schnee. Große und stark verdichtete Pakete (Pellets) können außerhalb des eigentlichen Reinigungsprozesses batchweise (chargenweise) in Pelletierern erzeugt und dann an den Verbrauchsort gebracht werden.

Bei der Erzeugung aus der Flüssigphase versucht man in den verwendeten Reinigungsdüsen durch spezielle Einbauten in den Gasstrom das Wachstum von Agglomeraten zu fördern, z.B. durch Prallflächen. Dabei schlägt die DE 10 2004 051055 A1 vor, Prallkörper in CO₂-Zuführung anzuordnen und die DE19950016 B4, Prallkörper in der Mischdüse anzuordnen.

Herkömmliche Pelletiervorrichtungen sind jedoch groß und teuer (Vorrichtung mit einer Höhe von 2 m). Für viele Anwendungen lohnt es sich deshalb nicht einen Pelletierer vorzusehen. Bei solchen Anwendungen müssen die CO₂-Pellet geliefert werden. Dies ist jedoch logistisch äußerst aufwendig, da die Pellets zum einen kühl gelagert werden müssen und zum anderen nicht lange gelagert werden können.

Alternativ ist es möglich, die CO₂-Teilchen kontinuierlich aus Flüssig-CO₂ herzustellen und der Düse zuzuführen. Die Größe der Agglomerate, die aus einer Versorgung mit Flüssig-Kohlendioxid erzielt werden, ist aber sehr gering. Dies ist u.a. eine Folge der hohen Strömungsgeschwindigkeiten und Turbulenzen in den verwendeten Düsen, die größere Agglomerate zerstören. Die Bindung der Kristalle innerhalb der Agglomerate ist schwach, da keine Kraft aufgebracht werden kann, um die Agglomerate zu verdichten. Die Nachexpansion des Gas-Fest-Gemisch in einer Beschleunigungsdüse zerreißt die Teilchen weiter.

Standardgemäß wird zur Erzeugung von Trockeneis flüssiges Kohlendioxid auf Drücke unter 5,18 bar entspannt, wobei gasförmiges und festes Kohlendioxid entstehen. Bei Eingangstemperaturen von 0°C teilt sich dies in etwa 40 Massen-% festes und 60 % gasförmiges Kohlendioxid auf.

Ein Verdichten der Feststoff-Teilchen ist nicht möglich bei Vorhandensein großer Mengen gasförmigen Kohlendioxids. Daher müssen die beiden Phasen getrennt werden. In Pelletierern erfolgt dies dadurch, dass der Raum, in den das flüssige Kohlendioxid entspannt wurde, durch einen beweglichen Kolben verkleinert wird. Dabei kann das gasförmige Kohlendioxid durch die Behälter-Wand, die aus porösem Material (z.B. Sinterbronze) besteht, ausströmen, feste Teilchen werden zurückgehalten. Nachdem der Schnee weitgehend entgast ist, wird er mit hohem Druck durch eine Matrize gepresst wobei die Pellets entstehen.

Aus der DE 10 2008 036 331 B3 ist eine Strahleinrichtung zum Bestrahlen von zu behandelnden Oberflächen mit einem Gemischstrom aus Druckgas und Trockeneis-Pellets im kontinuierlichen Betrieb bekannt. Die Einrichtung umfasst eine Speisevorrichtung für komprimiertes CO₂, einen Schneckenförderer mit einer rotierbaren Schnecke und einen Anschluss für die Speisevorrichtung, der in einen Expansionsraum mündet, eine Matrize, die von dem Schneckenförderer mit CO₂-Schnee beliefert wird und Matrizendurchlässe zum Bilden der Trockeneis-Pellets aufweist, und ein den Raum des Schneckenförderers im Eintrittsbereich des komprimierten CO₂ axial begrenzendes Filter, wobei überschüssiges CO₂-Gas aus dem Raum des Schneckenförderers über das Filter und einen Abgasauslass abgeführt wird. Die Wirksamkeit der Entgasung über das Filter ist aber wegen der vergleichsweise kleinen Stirnfläche des Filters begrenzt. Aufgrund verbleibenden CO₂-Gases in dem Expansionsraum ist auch die Verdichtungsfreudigkeit der festen CO₂-Partikel gering.

### Kurzfassung der Erfindung

Die Aufgabe der vorliegenden Erfindung besteht darin, die Nachteile des Stands der Technik zu vermeiden. Insbesondere besteht eine Aufgabe der Erfindung darin, eine Vorrichtung anzugeben, um aus einer Flüssigversorgung kontinuierlich verdichteten bzw. agglomerierten CO₂-Schnee bzw. CO₂-Pellets zu erzeugen.

Wenigstens ein Teil der vorstehend genannten Aufgaben wird durch die Merkmale der unabhängigen Ansprüche gelöst. Bevorzugte Ausführungsformen und Weiterentwicklungen der Erfindung, die spezielle Teilaufgaben lösen, bilden den Gegenstand der Unteransprüche.

Nach einem Gesichtspunkt der vorliegenden Erfindung ist eine Vorrichtung zum Erzeugen von Trockeneispaketen versehen mit einer Zuführungseinrichtung für flüssiges CO₂, die in einen Entspannungsraum einmündet; einer Förderschnecke, die in dem Entspannungsraum angeordnet ist und die ausgelegt und eingerichtet ist, in dem Entspannungsraum entstehendes Trockeneis von der Einmündung der Zuführungseinrichtung in Richtung einer Matrize zu fördern; und einer Entgasungseinrichtung, aufweisend einen Filter, der den Entspannungsraum radial begrenzt und für CO₂-Gas durchlässig, für Trockeneispartikel jedoch undurchlässig ist.

Im Sinne der vorliegenden Erfindung ist Trockeneis ein fester Aggregatzustand von Kohlendioxid (CO₂), und ist ein Entspannungsraum ein Raum, der auch ausgelegt und eingerichtet ist, zugeführtes flüssiges CO₂ so entspannen zu lassen, dass in dem Entspannungsraum Trockeneis entstehen kann. Ferner weist eine Förderschnecke im Sinne der vorliegenden Erfindung eine gewendelte Schaufel auf, die auf einer drehbar gelagerten und antreibbaren Welle angeordnet ist und den Entspannungsraum im Wesentlichen ausfüllt. Eine Matrize ist im Sinne der vorliegenden Erfindung ein Bauteil, welches den Entspannungsraum endseitig begrenzt und eine Mehrzahl von durchgehenden Öffnungen aufweist, die ausgelegt und eingerichtet ist, in dem Entspannungsraum entstandenes und gegebenenfalls agglomeriertes Trockeneis aus dem Entspannungsraum zu entlassen und dabei zu Paketen zu formen. Als Filtermaterial kann ein Sintermetall (insbesondere Sinterbronze) verwendet werden, das die erforderliche Porosität aufweist, um Trockeneispartikel zurückzuhalten, aber gasförmiges Kohlendioxid hindurchzulassen. Als geeignetes Filtermaterial haben sich handelsübliche Sintermetallfilter beispielsweise der Filterklasse 15, d.h. mit einer Filterfeinheit von 28 µm, herausgestellt. Es können aber auch gröbere (z.B. Filterklasse 50) oder feinere Filter eingesetzt werden. Die Vorrichtung zum Erzeugen von Trockeneispaketen wird innerhalb dieser Anmeldung auch als Schneegenerator bezeichnet.

Mit der erfindungsgemäßen Vorrichtung steht eine einfache und kostengünstige Lösung zur Verfügung, mit welcher vor Ort aus flüssigem CO₂ agglomerierte CO₂-Partikel erzeugt werden können. Nach der vorliegenden Erfindung wird flüssiges Kohlendioxid kontinuierlich zugeführt und in einen von der Förderschnecke definierten Ringkanal entspannt und bildet dabei ein Gemisch aus Trockeneis und CO₂-Schnee. Der Ringkanal ist radial durch den Filter begrenzt. Der Filter bildet also insbesondere eine radiale Wandung des Ringkanals. Das Filtermaterial ist ein poröses Material (insbesondere Sinterbronze). Axial ist der Ringkanal vorzugsweise über zwei Deckel nach innen und/oder außen begrenzt, den äußeren Abschluss bildet jeweils ein druckfestes Gehäuse. Je mehr Kohlendioxid eingespeist wird, desto mehr sammelt sich in dem Ringkanal. Die Gasphase kann über die poröse Wandung entweichen, die Festphase verbleibt aber im Ringkanal. Die Förderschnecke sorgt dafür, dass das entstandene feste Kohlendioxid kontinuierlich von der Oberfläche abgetragen und zur gegenüberliegenden Seite gefördert wird, wo es den Ringkanal über Öffnungen im Deckel verlassen kann. Die Förderschnecke wirkt somit einer Verstopfung der Filteroberfläche entgegen. Da die Filterung über die gesamte Länge der Förderschnecke erfolgt, ist die wirksame Filteroberfläche groß, und die Entgasungswirkung ist hoch. Somit kann die Verdichtung und Agglomeration gefördert werden. Die Öffnungen bilden die Matrize, die die Form der erzeugten Schneepakete definiert. Die Förderschnecke wird vorzugsweise über einen Motor und eine Achse angetrieben.

Eine Verdichtung des Schnees entsteht entweder durch eine entsprechende Dimensionierung der Matrize, die ein Aufstauen und Nachdrücken durch die Förderschnecke hervorruft, oder durch eine Reduzierung des Querschnitts zur Matrize hin. Dadurch wird auch die Strömungsgeschwindigkeit des verbliebenen Gasanteils und damit das Bestreben, den Ringkanal zu verlassen, erhöht.

Das gasförmige Kohlendioxid, das durch die poröse Wandung strömt, kann in einem Gassammelraum gesammelt werden und die Schneebildungseinheit zur selben Seite wie die Schneepartikel verlassen, also insbesondere stromabwärts der Matrize in den Trockeneisstrom einmünden.

In einer ersten Variante bildet der Filter eine äußere radiale Wandung des Entspannungsraums. Ein Gassammelraum kann in diesem Fall durch ein äußeres Gehäuse gebildet werden, der die Schneebildungseinheit umfasst, und die Form eines Ringkanals aufweisen. In einer zweiten Variante bildet der Filter die Wandung einer Hohlwelle, wobei die Hohlwelle die Förderschnecke trägt. In diesem Fall bildet die Hohlwelle einen Gassammelraum (zentralen axialen Sammelkanal).

Trotz eines kontinuierlichen Abtragens des festen Kohlendioxids von der Oberfläche des porösen Materials kann es sein, dass die Poren nach längerem Betrieb verstopfen. Zur Lösung dieses Problems kann man sich zunutze machen, dass für die spätere Beschleunigung der erzeugten Kohlendioxid-Teilchen erhebliche Mengen Druckluft eingesetzt werden. Die Druckluft kann durch den oben beschriebenen Sammelkanal für gasförmiges Kohlendioxid geleitet werden, wo es sich mit dem gasförmigen Kohlendioxid mischt und den Sammelkanal durch Öffnungen im Deckel verlässt. Anschließend reißt das Gasgemisch die produzierten Schneepartikel mit und führt es einer nachfolgenden Beschleunigungsdüse zu. Die Druckluft kann auch zur Regeneration des Filters bzw. seiner Oberfläche genutzt werden, indem in regelmäßigen Abständen bei ausgeschalteter Kohlendioxid-Zufuhr weiterhin Druckluft durch den Kanal strömt und dabei auch die poröse Oberfläche erwärmt. Da Trockeneins bereits bei -78°C sublimiert und Druckluft üblicherweise Umgebungstemperatur hat, kann mit sehr kurzen Regenerationszeiten gerechnet werden.

Weiterhin ist eine verlängerte Standzeit des Schneegenerators durch die Kombination der Varianten erzielbar, indem sowohl Innen- als auch Außenring aus dem Filtermaterial bestehen. Damit entstehen zwei Sammelkanäle für das gasförmige Kohlendioxid, wobei die Druckluft nicht zwangsläufig durch beide Kanäle, insbesondere in der Achse, geführt werden muss.

Einem Zusetzen der Matrize kann dadurch entgegengewirkt werden, dass am vorderen Ende der Schnecke ein Schaber ausgebildet ist, der vollflächig über die Matrize schabt.

Weiterhin ist von Vorteil, wenn die Matrizenlöcher konisch ausgebildet sind, wobei sie sich in Richtung Ausgang verjüngen. Hierdurch wird der Filterschnee sukzessive verdichtet.

Die Matrize kann auch eine nicht-plane Geometrie aufweisen, Z.B. die Form eines Kegels oder einer Halbkugel. Die Geometrie der Extruderschnecke ist dieser Form angepasst.

Die kompakte Ausführung des Schneegenerators erlaubt es, diesen direkt in eine Applikationseinrichtung wie etwa eine Strahlpistole zu integrieren. Die zylindrische und kompakte Bauweise des Schneegenerators eignet sich ferner dazu, ihn in mit einem Motor, z.B. Druckluftmotor, und einer Expansionsdüse axial anzuordnen.

Auch eine nicht-koaxiale Anordnung von Druckluft-Zufuhr und Düse einerseits sowie der Schneeerzeugung andererseits ist möglich, z.B. eine parallele Anordnung oder eine rechtwinkelige. In diesen Fällen wäre eine Mischkammer vorzusehen, in welche einerseits die erzeugten Trockeneispakete als auch ein Trägergas (Druckluft) münden.

Im Falle der Verwendung eines Druckluftmotors bietet sich an, die für den Antrieb des Motors benötigte Druckluft nach Austritt aus dem Motor dem Druckluftstrom für die Beschleunigung des CO₂-Schnees zuzuführen.

Weitere Gesichtspunkte, Vorteile und Merkmale der vorliegenden Erfindung werden aus der nachstehenden Beschreibung und den beigefügten Zeichnungen besonders bevorzugter Ausführungsformen der Erfindung ersichtlich.

### Kurzbeschreibung der Zeichnungen

FIG. 1 ist eine Längsschnittansicht eines Schneegenerators in einer ersten Ausführungsform der Erfindung;
FIG. 2 ist eine Längsschnittansicht eines Schneegenerators in einer zweiten Ausführungsform der Erfindung;
FIG. 3 ist eine Längsschnittansicht eines Schneegenerators in einer dritten Ausführungsform der Erfindung;
FIG. 4 zeigt schematisch eine Schneegeneratoranordnung als eine vierte Ausführungsform der Erfindung;
FIG. 5 zeigt schematisch eine Schneegeneratoranordnung als eine fünfte Ausführungsform der Erfindung;
FIG. 6 zeigt schematisch eine Schneegeneratoranordnung als eine sechste Ausführungsform der Erfindung;

### Beschreibung bevorzugter Ausführungsformen

Nachstehend werden unter Bezugnahme auf die begleitenden Zeichnungen besonders bevorzugte Ausführungsformen der Erfindung erläutert werden.

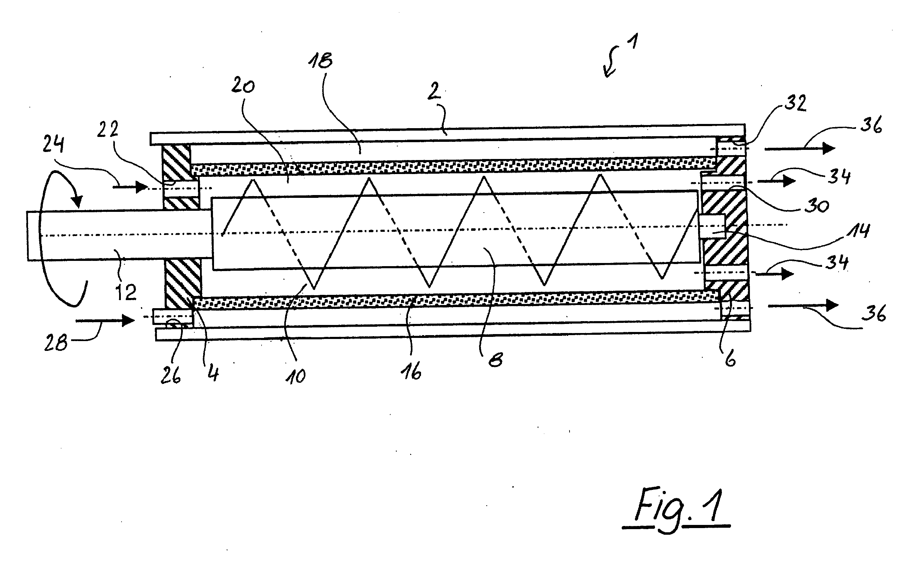

FIG.1 zeigt einen Schneegenerator 1 in einer ersten Ausführungsform im Längsschnitt. Der Schneegenerator ist eine Vorrichtung zum Erzeugen von Trockeneis im Sinne der Erfindung.

Der Schneegenerator 1 weist ein im Allgemeinen rohrförmiges, druckfestes Gehäuse 2 auf, welches an seinen Enden jeweils mit einem Deckel 4, 6 verschlossen ist. Dabei ist der Deckel 4 als hinterer Deckel an dem hinteren Ende des Gehäuses 2 definiert, und der Deckel 6 ist als vorderer Deckel am vorderen Ende des Gehäuses 2 definiert. Zwischen dem hinteren Deckel 4 und dem vorderen Deckel 6 erstreckt sich eine Extruderwelle 8, die eine Förderschnecke 10 trägt. Ein Antriebszapfen 12 der Extruderwelle 8 ist in dem hinteren Deckel 4 drehbar gelagert, und ein Lagerzapfen 14 der Extruderwelle 8 ist in dem vorderen Deckel 6 drehbar gelagert. Die Einzelheiten der Lagerung sind in der Figur nicht näher dargestellt; exemplarisch sei ohne Beschränkung der Allgemeinheit die Lagerung des Antriebszapfens 12 als Axial-/Radiallager oder Axiallager und die Lagerung des Lagerzapfens 14 als Radiallager ausgeführt.

Des weiteren erstreckt sich zwischen dem hinteren Deckel 4 und dem vorderen Deckel 6 ein Filterrohr 16 koaxial mit der Antriebswelle 8 und dem Gehäuse 2. Das Filterrohr 16 ist aus einem druckstabilen, gasdurchlässigen Material wie etwa einem Sintermetall, insbesondere Sinterbronze oder dergleichen, hergestellt und teilt den Innenraum des Schneegenerators 1 in einen äußeren Ringkanal 18 und einen inneren Ringkanal 20. Dabei entspricht der Innendurchmesser des Filterrohrs 16 dem Außendurchmesser der Förderschnecke 10. Der äußere Ringkanal 18 ist ein Gassammelkanal im Sinne der Erfindung, und der innere Ringkanal ist ein Entspannungsraum im Sinne der Erfindung.

Der hintere Deckel 4 weist wenigstens eine CO₂-Anschiussöffnung 22 auf, die sich in den inneren Ringkanal 20 öffnet. Die CO₂-Anschlussöffnung 22 ist über eine nicht näher dargestellte Anschlussanordnung mit einer nicht näher dargestellten Bereitstellungs- und Zuführungseinrichtung verbunden, über welche flüssiges Kohlendioxid (LCO₂) 24 zuführbar ist. Die Zuführung von flüssigem Kohlendioxid (LCO₂) in den Ringkanal 20 kann auch über eine radiale oder tangentiale Öffnung im Filterrohr 16 realisiert sein (nicht dargestellt).

Des weiteren ist in dem hinteren Deckel 4 wenigstens eine Druckgas-Anschlussöffnung 26 vorgesehen, welche sich in den äußeren Ringkanal 18 öffnet. Die Druckluft-Anschlussöffnung 26 ist über eine nicht näher dargestellte Anschlussanordnung mit einer nicht näher dargestellten Bereitstellungs- und Zuführungseinrichtung verbunden, über welche Druckluft 28 zuführbar ist.

Der vordere Deckel 6 weist eine Mehrzahl von Schnee-Auslassöffnungen 30 auf, die mit dem inneren Ringkanal 20 in Verbindung stehen, und eine Mehrzahl von Gas-Auslassöffnungen 34, die mit dem äußeren Ringkanal 18 in Verbindung stehen. Der vordere Deckel ist im Bereich des inneren Ringkanals 20 eine Matrize im Sinne der Erfindung, und die Schnee-Auslassöffnungen 30 sind Matrizenlöcher im Sinne der Erfindung.

Das Filterrohr 16 sitzt gasdicht auf zentralen Absätzen des hinteren Deckels 4 und des vorderen Deckels 6. Der Antriebszapfen 12 ist mit einem Motor (nicht näher dargestellt), ggf. über ein geeignetes Getriebe (nicht näher dargestellt), verbunden. Die Drehzahl ist veränderbar, beispielsweise und ohne Beschränkung der Allgemeinheit zwischen 300 und 600 U/min.

Es folgt eine Beschreibung der Betriebsweise des Schneegenerators 1 gemäß der vorliegenden Ausführungsform.

Über eine nicht näher dargestellte CO₂-Zuführungseinrichtung wird flüssiges Kohlendioxid unter hohem Druck der CO₂-Anschlussöffnung 22 zugeführt. Das flüssige CO₂ tritt über die CO₂-Anschlussöffnung 22 in den inneren Ringkanal 20 ein und entspannt dort auf einen Druck unter 5,18 bar (Tripelpunkt des Kohlendioxids), wobei gasförmiges und festes Kohlendioxid entstehen. Bei Eingangstemperaturen von 0° Celsius teilt sich dieses Gemisch in etwa 40 Massenprozent festes und 60 Massenprozent gasförmiges Kohlendioxid auf. Die Extruderwelle 8 rotiert mit vorgegebener Drehzahl, fördert das Kohlendioxidgemisch in Richtung des vorderen Deckels 6 und verdichtet es gleichzeitig. Überschüssiges CO₂-Gas wird dabei durch das Filterrohr 16 in den äußeren Ringkanal 18 gedrückt. Die im inneren Ringkanal 20 zurückgehaltenen, festen CO₂-Teilchen agglomerieren und bilden Schneepartikel, welche durch die Förderschnecke 10 zur gegenüberliegenden Seite, also zu dem vorderen Deckel 6, gefördert und ggf. von der Oberfläche des Filterrohrs 20 abgetragen werden. Der gebildete CO₂-Schnee verlässt den inneren Ringkanal über die Schnee-Auslassöffnungen 30, wo er in Pakete geformt wird, als ein Trockeneisstrom 34. Die Schnee-Auslassöffnungen 30 bilden somit eine Matrize, die die Form der erzeugten Trockeneispakete definiert.

Durch eine nicht näher dargestellte Druckluft-Zuführungseinrichtung wird Druckluft 28 der Druckluft-Anschlussöffnung 26 in dem hinteren Deckel 4 zugeführt. Die Druckluft entspannt in dem äußeren Ringkanal 18 und vermischt sich mit dem durch das Filterrohr 16 gedrückten Kohlendioxidgas. Das Gemisch aus Druckluft und CO₂-Gas entweicht über die Gas-Auslassöffnungen 32 aus dem äußeren Ringkanal 18 als ein Trägergas 36. Das Trägergas 36 reißt die über die Matrize (Schnee-Austrittsöffnungen 30 des vorderen Deckels 6) austretenden Schneepakete mit und führt sie einer weiteren Verwendung, z.B. einer Reinigungsdüse (nicht näher dargestellt) zu.

Die Verdichtung des Schnees wird durch eine entsprechende Dimensionierung der Matrize, also der Schnee-Auslassöffnungen 30, die ein Aufstauen und Nachdrücken durch die Förderschnecke 10 hervorruft, bestimmt. In einer nicht näher dargestellten Abwandlung der vorliegenden Ausführungsform entsteht eine weitere Verdichtung des Schnees durch eine Reduzierung des Querschnitts des inneren Ringkanals 20 zu dem vorderen Deckel 6 hin. Dadurch wird auch die Strömungsgeschwindigkeit des verbliebenen Gasanteils und damit das Bestreben, den Ringkanal zu verlasen, erhöht.

Für die spätere Beschleunigung der erzeugten Schneeteilchen werden erhebliche mengen Druckluft eingesetzt. Diese Druckluft, die zuvor an der äußeren Wandung des Filterrohrs 16 entlang durch den äußeren Ringkanal 18 strömt, sorgt für ein Freiblasen der Poren des Filterrohrs 16.

Um zu vermeiden, dass sich die poröse Oberfläche des Filterrohrs 16 doch einmal zusetzen sollte, wird in regelmäßigen Abständen die Kohlendioxidzufuhr ausgeschaltet und weiterhin Druckluft 28 in den äußeren Ringkanal 18 geleitet. Hierdurch wird auch die poröse Oberfläche des Filterrohrs 16 erwärmt. Da Trockeneis bereits bei -78° Celsius sublimiert und Druckluft üblicherweise Umgebungstemperatur hat, kann man mit kurzen Regenerationszeiten auskommen.

Der Schneegenerator 1 der vorliegenden Ausführungsform kann überall dort eingesetzt werden, wo eine kontinuierliche Versorgung mit definierten Schneepaketen bessere Ergebnisse verspricht als ein fein verstäubter KohlendioxidSchnee (z.B. beim Frosten von Lebensmitteln), weil z.B. die Verweilzeit von Schneepaketen auf einer Oberfläche länger ist als die von kleinen Kristallen, die mit der Gasströmung leichter weggerissen werden. Je größer die Öffnungsfläche (maximale Querschnittsfläche der Förderschnecke bzw. des inneren Ringkanals), desto weicher wird der Schnee. Je kleiner er wird, desto kompakter werden die Teilchen. Dies geht mit einem erhöhten Drehmoment einher, das der Antriebsmotor aufbringen muss.

Durch die Wahl verschieden gestalteter Matrizen am Ausgang der Düse kann die Beschaffenheit des Schnees beeinflusst werden. Die Schnee-Auslassöffnungen 30 der Matrize sind in der Regel mit einer kreisförmigen Querschnittsfläche ausgebildet. Es kann jedoch auch zweckmäßig sein, die die Schnee-Auslassöffnungen 30 der Matrize mit einer nicht-runden Querschnittsfläche, insbesondere eckigen oder scharfkantigen Form auszubilden, da damit entsprechend kantige agglomerierte Schneepartikel bzw. Pellets erzeugt werden, mit welchen die Reinigungswirkung steigt. In einer Abwandlung dieser Ausführungsform ist der Schneegenerator 1 so ausgeführt, dass man die Matrize wechseln kann.

Einem Zusetzen der Matrize kann dadurch entgegengewirkt werden, dass am vorderen Ende der Schnecke ein Schaber ausgebildet ist, der vollflächig über die Matrize schabt.

Die Matrize kann auch eine nicht-plane Geometrie aufweisen, Z.B. die Form eines Kegels oder einer Halbkugel. Die Geometrie der Extruderschnecke ist dieser Form angepasst.

Die Steigung der Extruderschnecke (Abstand zweier Gewindegänge geteilt durch den Außendurchmesser) kann beispielsweise Werte zwischen 1:1 und 2:1 annehmen. Die Steigung kann sich aber auch ändern, um dem zum Ausgang hin abnehmenden Gasanteil in der Schnecke Rechnung tragen zu können.

Die Drehzahl liegt vorzugsweise zwischen 300 und 600 U/min.

Die Matrize sollte derart ausgeführt sein, dass sich kein Trockeneis zwischen der Förderschnecke und der Matrize ansammeln kann. Entsprechend sollte der gesamte Querschnitt der Matrize am Ende der Förderschnecke frei sein. Um die gewünschte Verdichtung der Teilchen zu erzielen, muss sich der Querschnitt anschließend aber verengen, z.B. durch das Ausformen sich verjüngender Kanäle.

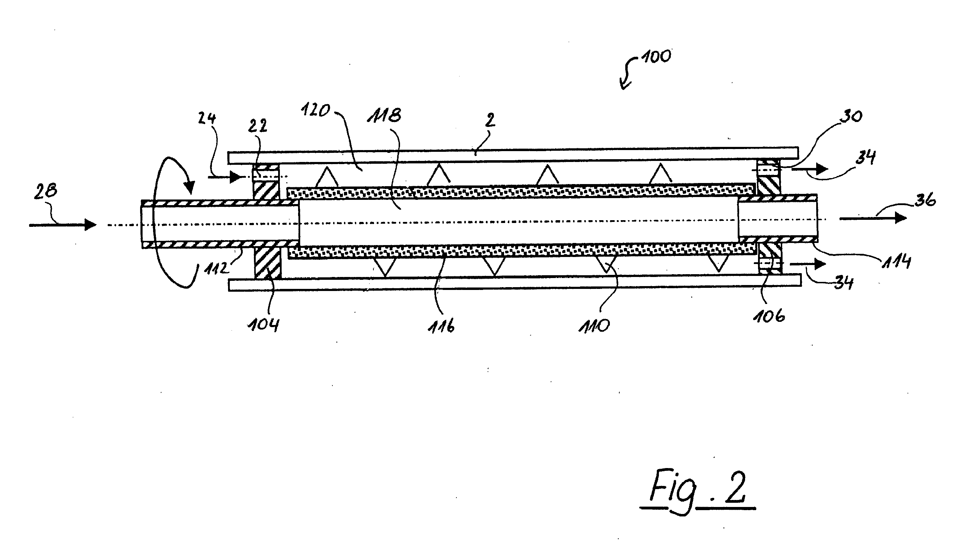

FIG. 2 zeigt einen Schneegenerator 100 in einer zweiten Ausführungsform der Erfindung im Längsschnitt. Dabei weisen gleiche Bezugszeichen die jeweils gleichen Funktionen wie in der Ausführungsform auf. Soweit nachstehend nichts anderes gesagt ist, gelten die Ausführungen über Funktionen, Aufbau und Wirkungsweise des Schneegenerators 1 aus dem Ausführungsbeispiel auch für diese Abwandlung. Insbesondere ist der Schneegenerator 100 ist eine Vorrichtung zum Erzeugen von Trockeneis im Sinne der Erfindung.

Gemäß der Darstellung in FIG. 2 weist ein Schneegenerator 100 ein im allgemeinen rohrförmiges und druckfestes Gehäuse 2 auf, welches an seinem hinteren und vorderen Ende mit einem hinteren Deckel 104 bzw. einem vorderen Deckel 106 verschlossen ist. Ein Filterrohr 116 ist drehfest mit einem hinteren Rohrstück 112 und einem vorderen Rohrstück 114 verbunden und erstreckt sich innerhalb des Gehäuses 2 zwischen dem hinteren Deckel 104 und dem vorderen Deckel 106, wobei das hintere Rohrstück 112 in dem hinteren Deckel 104 gelagert ist und aus diesem nach hinten heraus ragt und das vordere Rohrstück 114 in dem vorderen Deckel 106 gelagert ist und aus diesem nach vorne heraus ragt. Das hintere Rohrstück 112, das Filterrohr 116 und das vordere Rohrstück 114 bilden somit eine Extruderwelle. Zusätzlich bildet die Extruderwelle auch einen zentralen Kanal 118. Der zentrale Kanal 118 ist ein Gassammelraum im Sinne der Erfindung.

Obschon die Lagerung der Extruderwelle nicht im Einzelnen dargestellt ist, kann ohne Beschränkung der Allgemeinheit angenommen werden, dass das hintere Rohrstück 112 radial und axial gelagert ist und das vordere Rohrstück 114 radial gelagert ist. Das hintere Rohrstück 112 ist durch einen nicht näher dargestellten Motor, ggf. über ein nicht näher dargestelltes Getriebe, drehbar. Ferner ist das hintere Rohrstück 112 über eine nicht näher dargestellte Anschluss-Anordnung mit einer nicht näher dargestellten Druckluft-Zufuhr verbunden, über welche dem zentralen Kanal 118 Druckluft 28 zuführbar ist.

Zwischen dem Filterrohr 116 und dem Gehäuse 2 ist ein Ringkanal 120 ausgebildet, der ein Entspannungsraum im Sinne der Erfindung ist. In dem hinteren Deckel 104 ist wenigstens eine CO₂-Anschlussöffnung 22 ausgebildet, über welche wie bei der ersten Ausführungsform flüssiges CO₂ dem Ringkanal 120 zuführbar ist. In dem vorderen Deckel 106 sind mehrere Schnee-Auslassöffnungen 30 ausgebildet. Der vordere Deckel 106 ist eine Matrize im Sinne der Erfindung.

Im Betrieb wird das hintere Rohrstück 112 und damit die gesamte Extruderwelle mit der Förderschnecke 110 mit vorgegebener Drehzahl in Drehung versetzt, dem inneren Kanal 118 wird über das hintere Rohrstück 112 Druckluft 28 zugeführt, und dem Ringkanal 120 wird über die CO₂-Anschlussöffnung 22 flüssiges CO₂ unter hohem Druck zugeführt. Das CO₂ entspannt in dem Ringkanal 120, wobei ein Gemisch aus festen CO₂-Partikeln und gasförmigem CO₂ entsteht. Die Gasphase entweicht durch das Filterrohr 116 in den inneren Kanal 118, während die festen Teilchen in dem Ringkanal 120 verbleiben und durch die Förderschnecke 110 in Richtung des vorderen Deckels 106 gefördert werden. Auf diesem Weg agglomerieren die CO₂-Partikel und bilden CO₂-Schnee, der über die Schnee-Auslassöffnungen 30 in Pakete geformt wird als ein Trockeneisstrom 34 nach außen austritt. Das gasförmige CO₂, das durch das Filterrohr 116 in den inneren Kanal 118 entwichen ist, vermischt sich dort mit der Druckluft 28 und verlässt den inneren Kanal 118 über das vordere Rohrstück 114 als ein Luft/C0₂-Gemisch (Trägergas) 36. Der Trockeneisstrom 34 wird von dem Trägergasstrom 36 mitgerissen und einer nicht näher dargestellten Verwendung, etwas einer Strahldüse, zugeführt.

Im Übrigen entsprechen Funktion und Betriebsweise der ersten Ausführungsform, wie auch die Abwandlungen der ersten Abwandlungsform auf die vorliegende Ausführungsform anwendbar sind.

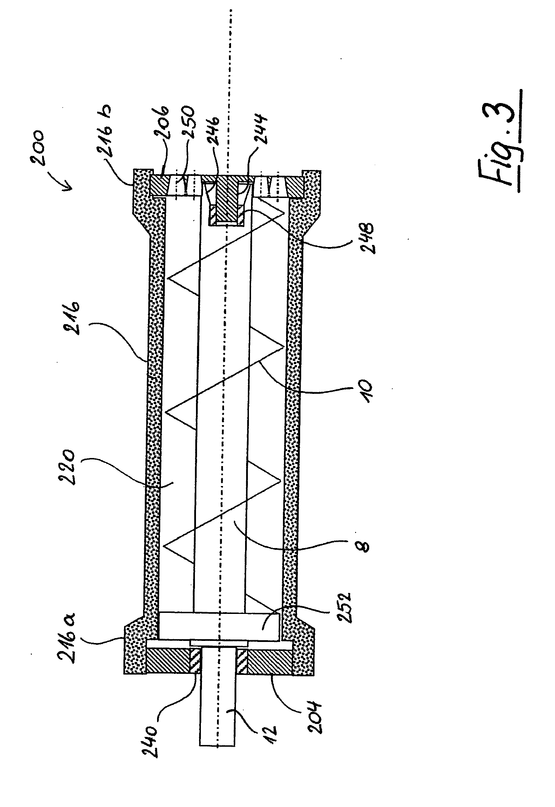

FIG. 3 zeigt einen Schneegenerator 200 in einer dritten Ausführungsform im Längsschnitt. Bauteile mit gleichen Bezugszeichen weisen die gleichen Funktionen wie in der Ausführungsform auf. Soweit nachstehend nichts Gegenteiliges gesagt wird oder sich aus technischen Gründen ersichtlich zwingend ergibt, gelten die Erläuterungen zu der ersten oder zweiten Ausführungsform auch für diese Ausführungsform. Insbesondere ist der Schneegenerator eine Vorrichtung zum Erzeugen von Trockeneis im Sinne der Erfindung.

Gemäß der Darstellung in FIG. 3 unterscheidet sich der Schneegenerator 200 dieser Ausführungsform von dem Schneegenerator 1 der ersten Ausführungsform im Wesentlichen dadurch, dass kein Außengehäuse (2 in FIG. 1) vorhanden ist. Ein Filterrohr 216 aus einem porösen Sintermetall ist als Formteil ausgebildet, das zwei endseitige Aufweitungen 216a und 216b aufweist. Die Aufweitung 216a am hinteren Ende nimmt einen hinteren Deckel 204 mit einem Lager 240 auf, in welchem der Antriebszapfen 12 der Extruderwelle 8 gelagert ist. Die Aufweitung 16b am vorderen Ende des Filterrohrs 16 nimmt einen vorderen Deckel 206 auf. Der vordere Deckel 206 weist einen nach innen weisenden Lagerdorn 244 auf, während im vorderen Ende der Extruderwelle 8 eine Axialbohrung 246 ausgebildet ist. In der Axialbohrung 246 ist ein Lager 248 angeordnet, welches sich auf dem Lagerdom 44 der Matrizenplatte 42 abstützt. Durch das Vorsehen des Lagerdorns 244 kann das Lager 248 mit Abstand zum Deckel 206 angeordnet werden. Hierdurch ist es möglich die Axialbohrung 246 in Richtung zum Deckel 206 z.B. konisch aufzuweiten, wodurch die gegenüberliegenden Flächen zwischen der drehenden Welle 8 und dem ruhenden Deckel 206 gering gehalten werden.

Durch die Ausbildung des Filterrohres 216 als von einer standardgemäßen Rohrform abweichenden Formteil ist es möglich, die endseitigen Aufweitungen dicker als den übrigen Bereich des Filterrohres 216 zu gestalten, so dass die Deckel 204 und 206 mittels eines in den Aufweitungen 216a und 216 b ausgebildeten Gewindes fixiert werden können. In dem Bereich zwischen den beiden Aufweitungen 216a und 216b des Filterrohres 216, der als Gas-Fest-Trennbereich bezeichnet werden kann, besitzt das Filterrohr etwa eine Wandstärke von 2 bis 4 mm.

In dem vorderen Deckel 206 sind mehrere Kegelbohrungen 250 ausgebildet, die sich nach außen hin verjüngen. Der Ringkanal 220 zwischen der Extruderwelle 8 und dem Filterrohr 220 ist ein Entspannungsraum im Sinne der Erfindung, und der vordere Deckel 206 ist eine Matrize im Sinne der Erfindung.

Am hinteren Ende trägt die Extruderwelle 8 noch eine Abschluss-Scheibe bzw. einen Ringsteg 252, der den inneren Ringkanal 220 nach hinten abschließt. Die Zuführung (in Figur 3 nicht sichtbar) für flüssiges Kohlendioxid (LCO₂) ist am Filterrohr 216 benachbart zur endseitigen Aufweitung 216a ausgebildet, die an dem zur Matrize 206 gegenüberliegenden Ende des Schneegenerators 200 angeordnet ist. Durch den Ringsteg 252 wird verhindert, dass CO₂-Schnee zum rückwärtigen Lager 240 gelangt.

Bei dieser Abwandlung verlässt der bereits vorverdichtete CO₂-Schnee den Ringkanal 220 über eine Mehrzahl von Kegelbohrungen 250, die sich nach außen hin verjüngen. Hierdurch erfolgt eine weitere Verdichtung der Schneepartikel.

Das aus dem Ringkanal 220 durch das Filterrohr 216 austretende CO₂-Gas wird in die Umgebung entlassen. Eine Druckluftzuführung erübrigt sich in diesem Fall. Durch das Weglassen des Gehäuses 2 gemäß dem ersten und zweiten Ausführungsbeispiel kann das CO₂-Gas ungehinderter entweichen. Hierdurch wird die Beschleunigungswirkung durch das CO₂-Gas erheblich reduziert. Im Rahmen der vorliegenden Erfindung ist es selbstverständlich auch möglich, diesen Schneegenerator mit einem Gehäuse - ähnlich zum ersten und zweiten Ausführungsbeispiel - zu versehen.

Die Axialbohrung 246 weist eine kegelförmige Zentrierung auf, was bei einem Wechsel der Matrize (des vorderen Deckels 206) die Einführung des Lagerdorns 244 erleichtert. Bei einem Austausch der Matrize stützt sich die Lagerwelle 8 über den Ringsteg 252 im hinteren Bereich des Filterrohrs 216 radial ab und behält daher ihre Lage weitgehend bei.

Im Übrigen entsprechen Funktion und Betriebsweise der ersten oder zweiten Ausführungsform, wie auch die Abwandlungen der ersten oder zweiten Abwandlungsform auf die vorliegende Ausführungsform anwendbar sind.

Ausgangspunkt der Entwicklung war es, eine einfache Vorrichtung vorzusehen, mit welcher etwas festere CO₂-Schnee-Agglomerate aus flüssigem CO₂ herstellbar sind. Es zeigte sich überraschend, dass mit ersten Laborprototypen CO₂ Agglomerate erzeugen konnte, die nahe an die Qualität von Pellets herankommen. Der ganze Mechanismus war nicht länger als 15-20 cm, wobei noch der Antriebsmotor hinzuzufügen ist. Ggf. ist noch eine entsprechende Düse zum Abgeben der CO₂-Agglomerate vorzusehen.

Eine weitere positive Überraschung war, dass der Filter im Wesentlichen während der Benutzung der Vorrichtung frei bleibt. Dies kann daran liegen, dass die Schnecke am Filter schabt oder mittelbar über das verdichtete CO₂ am Filter schabt. Aber selbst wenn der Filter sich von Zeit zu Zeit zusetzen sollte, könnte man ihn mit einer warmen Strömung (Druckluft) schnell frei machen. Warm bedeutet hier z.B. 15°C.

Mit der Erfindung kann auch eine wesentliche Markterweiterung für die Anwendung von Kohlendioxid- Reinigungsverfahren erzielt werden. Das Reinigen mit vorproduzierten Pellets (z.B. CRYOCLEAN® pellet) bringt logistischen Aufwand mit sich, der insbesondere dann kaum in Kauf genommen wird, wenn das Verfahren aggressiver ist als tatsächlich erforderlich. Das Reinigen mit kleinen Schneekristallen (z.B. CRYOCLEAN® snow) ist nur für sehr leichte Verschmutzungen (Staub, Schmutz, Rückstände von Trennmitteln, Ziehöle) geeignet und deckt damit nur einen kleinen Teil des gesamten Reinigungsmarkts ab. Demgegenüber eröffnet das Reinigen mit größeren Trockeneis-Paketen, die aus der Flüssigphase erzeugt werden, einen breiten Anwendungsbereich, z.B.: Förderbänder, Transportbehälter, Maschinen, Motoren, Züge.

Alle Anwendungen, wo eine kontinuierliche Versorgung mit definierten Schneepaketen bessere Ergebnisse verspricht, als ein fein verstäubter KohlendioxidSchnee (z.B. beim Frosten von Lebensmitteln), eignen sich für eine Anwendung oder weitere Ausgestaltung der Erfindung. Die Verweilzeit von Schneepakten auf einer Oberfläche ist vermutlich länger als die von kleinen Kristallen, die mit der Gasströmung leichter weggerissen werden.

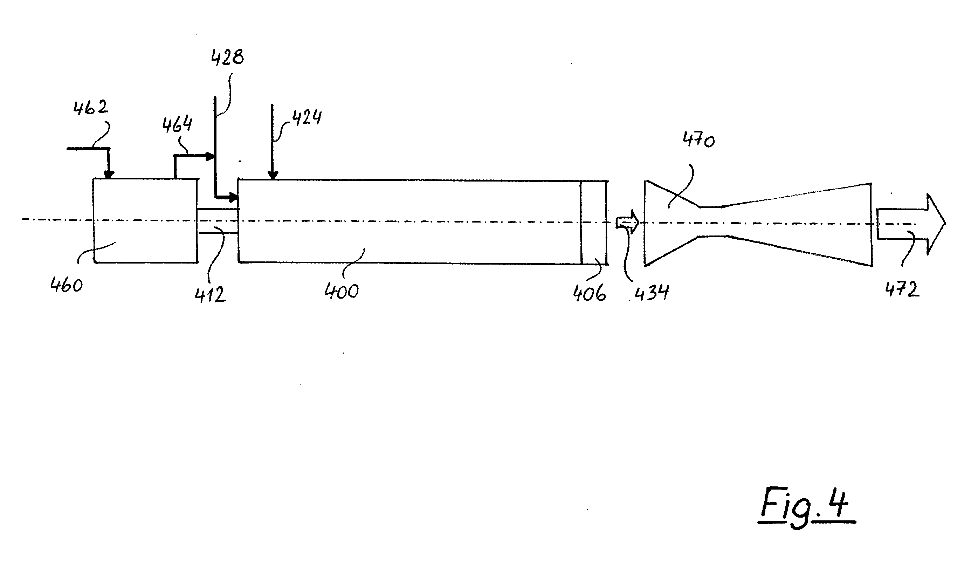

Nachstehend werden anhand der FIGN. 4 bis 6 verschiedene Anordnungen eines Schneegenerators mit Antriebsmotor und Beschleunigungsdüse beschrieben.

FIG. 4 zeigt schematisch eine koaxiale Anordnung als eine vierte Ausführungsform der Erfindung.

Kernstück ist ein Schneegenerator 400 mit einer Matrize 406 und einer Antriebswelle 412. Der Schneegenerator 400 kann einer der Schneegeneratoren 1, 100, 200 der ersten bis dritten Ausführungsform sein. Die Matrize 406 kann einer der vorderen Deckel 6, 106, 206 der ersten bis dritten Ausführungsform sein. Die Antriebswelle 412 kann der Antriebszapfen 12, 212 der ersten oder dritten Ausführungsform oder das hintere Rohrstück 112 der zweiten Ausführungsform sein. Mit einem Pfeil 424 in FIG. 4 ist eine CO₂-Zufuhr angedeutet, und mit einem Pfeil 428 ist eine Druckluftzufuhr angedeutet. Die CO₂-Zufuhr und die Druckluftzufuhr können wie in einer der ersten bis dritten Ausführungsformen ausgebildet sein. Ein Motor 460 ist mit der Antriebswelle 412 koaxial angeordnet und treibt diese an. Der Motor 460 kann ein Motor beliebiger Bauart wie z.B. ein Elektromotor sein. In FIG. 4 ist der Motor 460 als ein Druckluftmotor dargestellt, der über eine eigene Druckluftversorgung (Motor-Druckluft) 462 verfügt. Die in dem Motor 460 verbrauchte Druckluft wird der allgemeinen Druckluftzufuhr 428 über eine Einspeisung 464 zugeführt. Es ist anzumerken, dass die Motor-Druckluft 462 der allgemeinen Druckluftzufuhr 428 entnommen sein kann und über eine geeignete Anpassungsvorrichtung mit etwa einem Verdichter, einem Drosselventil oder dergleichen (nicht näher dargestellt) auf den für den Motor 460 erforderlichen Druck gebracht werden kann.

Stromabwärts des Schneegenerators 400 bzw. der Matrize 406 ist eine Beschleunigungsdüse 470 angeordnet. Die Beschleunigungsdüse 470 erhält den aus der Matrize 406 abgegebenen Trockeneisstrom 434, beschleunigt ihn und gibt ihn als Schneestrahl 472 wieder ab.

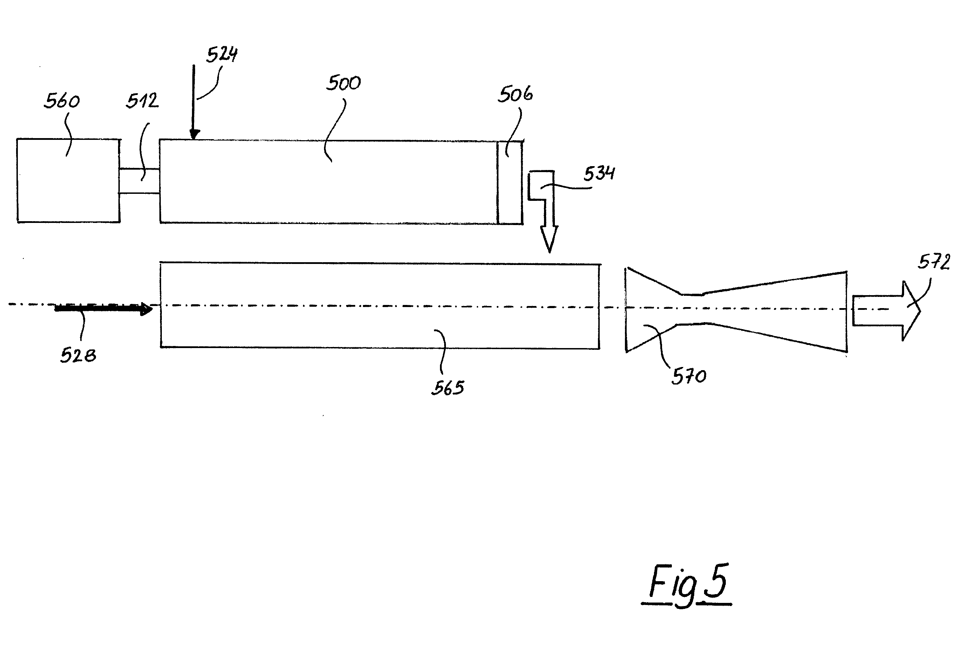

FIG. 5 zeigt schematisch eine parallele Anordnung als eine fünfte Ausführungsform der vorliegenden Erfindung.

Kernstück ist ein Schneegenerator 500 mit einer Matrize 506 und einer Antriebswelle 512. Der Schneegenerator 500 kann einer der Schneegeneratoren 1, 100, 200 der ersten bis dritten Ausführungsform sein. Die Matrize 506 kann einer der vorderen Deckel 6, 106, 206 der ersten bis dritten Ausführungsform sein. Die Antriebswelle 512 kann der Antriebszapfen 12, 212 der ersten oder dritten Ausführungsform oder das hintere Rohrstück 112 der zweiten Ausführungsform sein. Mit einem Pfeil 524 in FIG. 4 ist eine CO₂-Zufuhr angedeutet, und mit einem Pfeil 528 ist eine Druckluftzufuhr angedeutet. Die CO₂-Zufuhr und die Druckluftzufuhr können wie in einer der ersten bis dritten Ausführungsformen ausgebildet sein. Ein Motor 560 ist mit der Antriebswelle 512 koaxial angeordnet und treibt diese an. Der Motor 560 kann ein Motor beliebiger Bauart wie z.B. ein Elektromotor oder ein Druckluftmotor sein.

In achsenparalleler Anordnung mit der Baugruppe aus Schneegenerator 500 und Motor 560 ist eine Mischkammer 565 vorgesehen, in welche der aus der Matrize 506 austretende Trockeneisstrom 534 seitlich einmündet. Ferner wird der Mischkammer 565 in axialer Richtung Druckluft zugeführt, was durch einen Pfeil 528 symbolisiert ist. In der Mischkammer 565 wird das Trockeneis 534 durch einen Druckluftstrom 528 mitgerissen und vermischt sich mit diesem.

Stromabwärts der Mischkammer 565 und koaxial mit dieser ist eine Beschleunigungsdüse 570 angeordnet. Die Beschleunigungsdüse 570 erhält das aus der Mischkammer 565 abgegebene Gemisch aus Trockeneis und Trägergas, beschleunigt es und gibt es als Schneestrahl 572 wieder ab.

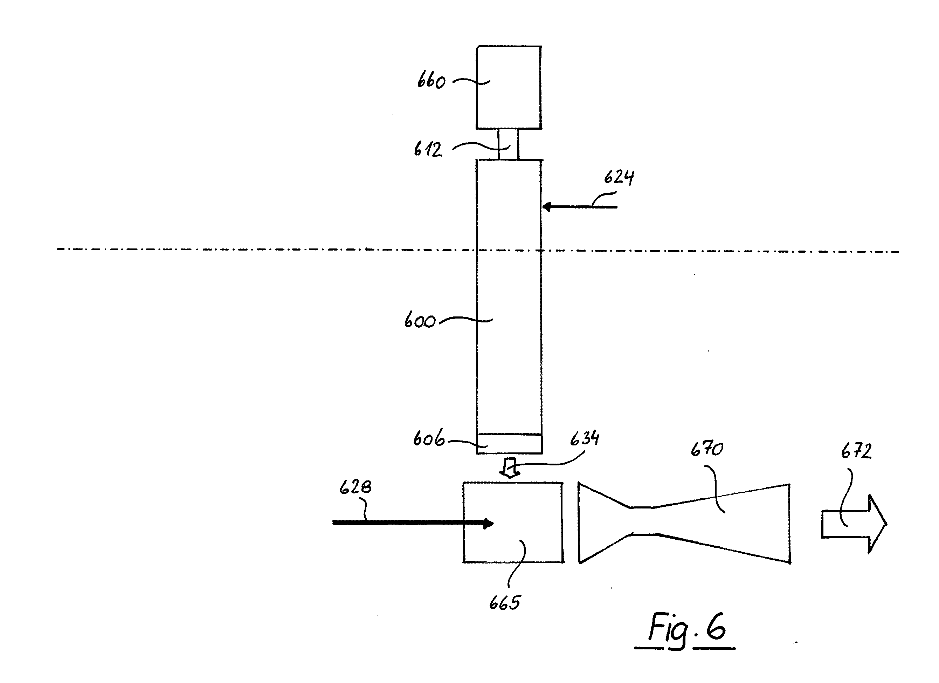

FIG. 6 zeigt schematisch eine rechtwinklige Anordnung als eine sechste Ausführungsform der Erfindung.

Kernstück ist ein Schneegenerator 600 mit einer Matrize 606 und einer Antriebswelle 612. Der Schneegenerator 600 kann einer der Schneegeneratoren 1, 100, 200 der ersten bis dritten Ausführungsform sein. Die Matrize 606 kann einer der vorderen Deckel 6, 106, 206 der ersten bis dritten Ausführungsform sein. Die Antriebswelle 612 kann der Antriebszapfen 12, 212 der ersten oder dritten Ausführungsform oder das hintere Rohrstück 112 der zweiten Ausführungsform sein. Mit einem Pfeil 624 in FIG. 4 ist eine CO₂-Zufuhr angedeutet, und mit einem Pfeil 628 ist eine Druckluftzufuhr angedeutet. Die CO₂-Zufuhr und die Druckluftzufuhr können wie in einer der ersten bis dritten Ausführungsformen ausgebildet sein. Ein Motor 660 ist mit der Antriebswelle 612 koaxial angeordnet und treibt diese an. Der Motor 660 kann ein Motor beliebiger Bauart wie z.B. ein Elektromotor oder ein Druckluftmotor sein.

Der aus der Matrize 606 austretende Trockeneisstrom 634 mündet in eine Mischkammer 665. Der Mischkammer 665 wird Druckluft zugeführt, wobei der Druckluftstrom senkrecht zu der Strömungsrichtung des eintretenden Trockeneises 634 orientiert ist, was durch einen Pfeil 628 symbolisiert ist. Die Achsen (Strömungsrichtungen) des Schneegenerators 600 und der Mischkammer 665 stehen senkrecht zueinander.

In der Mischkammer 665 wird der Trockeneisstrom 634 von dem Druckluftstrom 628 mitgerissen und vermischt sich mit diesem. Stromabwärts der Mischkammer 665 ist eine Beschleunigungsdüse 670 angeordnet. Die Beschleunigungsdüse 670 erhält das aus der Mischkammer 665 abgegebene Gemisch, beschleunigt es und gibt es als Schneestrahl 672 wieder ab.

### Liste der Bezugszeichen

- 1: Schneegenerator (erste Ausführungsform)
- 2: Gehäuse
- 4: hinterer Deckel
- 6: vorderer Deckel
- 8: Extruderwelle
- 10: Förderschnecke
- 12: Antriebszapfen
- 14: Lagerzapfen
- 16: Filterrohr
- 18: äußerer Ringkanal
- 20: innerer Ringkanal
- 22: CO₂-Anschlussöffnun
- 24: LCO₂
- 26: Druckluft-Anschlussöffnung
- 28: Druckluft
- 30: Schnee-Auslassöffnung
- 32: Gas-Auslassöffnung
- 34: Trockeneisstrom
- 36: Trägergas (Luft und CO₂)
- 100: Schneegenerator (zweite Ausführungsform)
- 104: hinterer Deckel
- 106: vorderer Deckel
- 112: hinteres Rohrstück
- 114: vorderes Rohrstück
- 116: Filterrohr
- 118: Zentralkanal
- 120: Ringkanal
- 200: Schneegenerator (dritte Ausführungsform)
- 204: hinterer Deckel (Lagerplatte)
- 206: vorderer Deckel (Matrizenplatte)
- 216: Filterrohr (=Gehäuse)
- 216a, 216b: Aufweitungen
- 220: Ringkanal
- 240: Lager
- 244: Lagerzapfen
- 246: Axialbohrung
- 248: Lager
- 250: Kegelbohrung
- 252: Ringsteg
- 400, 500, 600: Schneegenerator
- 406, 506, 606: Matrize
- 412, 512, 612: Antriebswelle
- 424, 524, 624: LCO₂-Zufuhr
- 428, 528, 628: Druckluftzufuhr
- 434, 534, 634: Trockeneisstrom (ggf. mit Trägergas)
- 460, 560, 660: Motor
- 462: Motor-Druckluft (optional)
- 464: Einspeisung Motor-Druckluft (optional)
- 470, 570, 670: Beschleunigungsdüse
- 472, 572, 672: Schneestrahl
- 580, 680: Mischkammer

Es wird ausdrücklich darauf hingewiesen, dass die vorstehende Bezugszeichenliste integraler Bestandteil der Beschreibung ist.

## Patentansprüche

1. Vorrichtung zum Erzeugen von Trockeneis, mit einer Zuführungseinrichtung für flüssiges CO₂, die in einen Entspannungsraum einmündet, wobei die Zuführungseinrichtung und der Entspannungsraum ausgelegt und eingerichtet sind, in dem Entspannungsraum Trockeneis entstehen zu lassen; einer Förderschnecke, die in dem Entspannungsraum angeordnet ist und die ausgelegt und eingerichtet ist, in dem Entspannungsraum entstehendes Trockeneis von der Einmündung der Zuführungseinrichtung in Richtung einer Matrize zu fördern, wobei die Matrize ausgelegt und eingerichtet ist, in dem Entspannungsraum entstandenes und gegebenenfalls agglomeriertes Trockeneis aus dem Entspannungsraum zu entlassen und dabei zu Paketen zu formen; und einer Entgasungseinrichtung, aufweisend einen Filter, der den Entspannungsraum begrenzt und für CO₂-Gas durchlässig, für CO₂-Partikel jedoch undurchlässig ist,
**dadurch gekennzeichnet, dass**
der Filter den Entspannungsraum radial begrenzt.

2. Vorrichtung gemäß Anspruch 1,
**dadurch gekennzeichnet, dass**
der Filter eine äußere radiale Wandung des Entspannungsraums bildet.

3. Vorrichtung gemäß Anspruch 2,
**dadurch gekennzeichnet, dass**
der Filter nach außen in einen Gassammelraum, vorzugsweise einen mit dem Schneckenförderer koaxialen Ringkanal mündet.

4. Vorrichtung gemäß einem der Ansprüche 1 bis 3,
**dadurch gekennzeichnet, dass**
der Filter die Wandung einer Hohlwelle bildet, wobei die Hohlwelle die Förderschnecke trägt und einen Gassammelraum radial innerhalb des Entspannungsraums bildet.

5. Vorrichtung gemäß Anspruch 3 oder 4,
**dadurch gekennzeichnet, dass**
der Gassammelraum stromabwärts der Matrize in den Trockeneisstrom einmündet.

6. Vorrichtung gemäß einem der Ansprüche 3 bis 5,
**weiter gekennzeichnet durch**
eine Druckgaszuführung, die in den Gassammelraum einmündet.

7. Vorrichtung gemäß einem der vorstehenden Ansprüche,
**dadurch gekennzeichnet, dass**
das komprimierte C02 dem Entspannungsraum in axialer Richtung und/oder radialer Richtung zugeführt wird.

8. Vorrichtung gemäß einem der vorstehenden Ansprüche,
**dadurch gekennzeichnet, dass**
der Entspannungsraum koaxial mit einer stromabwärts der Matrize vorgesehenen Beschleunigungsdüse angeordnet ist.

9. Vorrichtung gemäß einem der vorstehenden Ansprüche,
**dadurch gekennzeichnet, dass**
sich die Matrizenlöcher stromabwärts verjüngen.

10. Vorrichtung gemäß einem der vorstehenden Ansprüche,
**dadurch gekennzeichnet, dass**
die Matrize auswechselbar ist.

11. Vorrichtung gemäß einem der vorstehenden Ansprüche,
**dadurch gekennzeichnet, dass**
die Innenseite der Matrize nicht-plan, beispielsweise kegelförmig oder sphärisch ausgebildet ist.

12. Vorrichtung gemäß einem der vorstehenden Ansprüche,
**dadurch gekennzeichnet, dass**
am vorderen Ende der Schnecke ein Schaber ausgebildet ist, der vollflächig über die Innenseite der Matrize schabt.

13. Vorrichtung gemäß einem der vorstehenden Ansprüche,
**dadurch gekennzeichnet, dass**
die Steigung der Schnecke sich vom stromaufwärtigen zum stromabwärtigen Ende ändert, insbesondere verringert.

14. Trockeneis-Applikationsvorrichtung, mit einer Vorrichtung nach einem der vorstehenden Ansprüche, wobei die Trockeneis-Applikationsvorrichtung insbesondere transportabel ausgelegt und eingerichtet ist.

15. Verfahren zum Betreiben einer Trockeneis-Erzeugungseinrichtung oder einer Applikationsvorrichtung nach einem der vorstehenden Ansprüche,
**dadurch gekennzeichnet, dass**
die kontinuierliche Zufuhr flüssigen Kohlendioxids in regelmäßigen Abständen unterbrochen wird und Druckluft über die Oberfläche des Filters geleitet wird.
